# EUROPEAN PATENT APPLICATION

(11) **EP 4 278 910 A1**
(43) Date of publication of application: **22.11.2023**
(21) Application number: 21919089.9
(22) Date of filing: 15.12.2021
(51) Int. Cl.: A24F 40/40

(54) **HEATING ASSEMBLY AND HEATING ATOMIZATION DEVICE**

(30) Priority: 18.01.2021 CN 202120125622 U
(71) Applicant: Shenzhen Smoore Technology Limited, Shenzhen, Guangdong 518102 (CN)
(72) Inventor: ZHOU, Hongming, Shenzhen, Guangdong 518102 (CN); JIN, He, Shenzhen, Guangdong 518102 (CN); XIAO, Junjie, Shenzhen, Guangdong 518102 (CN); LIU, Hua, Shenzhen, Guangdong 518102 (CN)
(74) Representative: Michalski Hüttermann & Partner Patentanwälte mbB
(86) International application number: PCT/CN2021/138382
(87) International publication number: WO 2022/151901

(57) **Abstract**

A heating assembly and a heating and vaporization device are disclosed. The heating assembly has an outer surface configured to contact an aerosol-forming medium. A part of the outer surface is relatively recessed to form a low surface energy structure of the heating assembly. The low surface energy structure is a micro-scale structure and/or a nano-scale structure.

## Description

### CROSS-REFERENCE TO RELATED APPLICATIONS

This application claims priority to Chinese Patent Application No. 202120125622.2, filed with China National Intellectual Property Administration on January 18, 2021 and entitled "HEATING ASSEMBLY AND HEATING ATOMIZATION DEVICE", which is incorporated herein by reference in its entirety.

### TECHNICAL FIELD

This application relates to the technical field of heating and vaporization, in particular, to a heating assembly and a heating and vaporization device including the heating assembly.

### BACKGROUND

A heating and vaporization device may heat the solid-state aerosol-forming medium in a heat-not-burn manner, so as to generate aerosol for users to suck. The heating and vaporization device usually includes a heating assembly and a power supply. The power supply supplies power to the heating assembly, and the heating assembly converts electric energy into heat energy. The aerosol-forming medium absorbs heat and is vaporized to form aerosol.

When the heating and vaporization device operates, the heating assembly pierces into the aerosol-forming medium to form a central heating mode from inside to outside. During long-term use, residue is easy to form on the surface of the heating assembly. The residue not only affects the appearance of the heating assembly, but also can absorb the heat of the heating assembly to produce peculiar smell or harmful gas, thereby affecting the consistency of aerosol suction taste. In fact, the formation of residue closely related to the contact surface between the heating assembly and the aerosol-forming medium, and the residue formed on the contact surface can be reduced by reducing the surface energy of the contact surface. If the contact surface is directly covered with a low surface energy film, the resistance temperature of the material generally does not exceed 300°C because the low surface energy film is usually made of an organic material such as Teflon, and the highest operating temperature of the heating assembly may reach 350°C, which causes the low surface energy film to be inapplicable to the high temperature environment of the heating assembly. Therefore, it is urgent to reduce the surface energy of the contact surface by other means to reduce the generation of residue.

### SUMMARY

According to various exemplary embodiments of the present application, a heating assembly and a heating and vaporization device including the heating assembly are provided.

A heating assembly has an outer surface configured to contact an aerosol-forming medium. A part of the outer surface is relatively recessed to form a low surface energy structure of the heating assembly. The low surface energy structure is a micro-scale structure and/or a nano-scale structure.

In an embodiment, the heating assembly includes a substrate, a heating layer, and an insulative and thermally conductive layer. The heating layer is stacked between the substrate and the insulative and thermally conductive layer, and a surface of a side of the insulative and thermally conductive layer away from the heating layer forms the outer surface.

In an embodiment, a first direction and a second direction perpendicular to each other are used as a reference. The low surface energy structure includes a plurality of first grooves formed by recessing the outer surface, each of the first grooves integrally extends in the first direction, and the plurality of first grooves are arranged at intervals in the second direction.

In an embodiment, the width of the first groove in the second direction is in a range of 0.01 µm to 500 µm, the spacing between two adjacent first grooves is in a range of 0.02 µm to 500 µm, and the recessing depth of the first groove is in a range of 0.01 µm to 100 µm.

In an embodiment, the first groove is a linear groove or a curved groove.

In an embodiment, the low surface energy structure further includes a plurality of second grooves formed by recessing the outer surface. Each of the second grooves integrally extends in the second direction, the plurality of second grooves are arranged at intervals in the first direction, and the first grooves and the second grooves intersect and communicate with each other.

In an embodiment, the width of the second groove in the first direction is in a range of 0.01 µm to 500 µm, the spacing between two adjacent second grooves is in a range of 0.02 µm to 500 µm, and the recessing depth of the second groove is in a range of 0.01 µm to 100 µm.

In an embodiment, the second groove is a linear groove or a curved groove.

In an embodiment, the insulative and thermally conductive layer includes a plurality of protruding posts arranged in a matrix, and the cross sections of the protruding posts are in the shape of a circle, an oval, a rectangle, a rhombus, or a regular polygon.

In an embodiment, for any adjacent two rows of protruding posts arranged at intervals in the first direction, orthogonal projections of the two rows of protruding posts in the first direction completely overlap, partially overlap, or do not overlap.

In an embodiment, the low surface energy structure includes a plurality of counter bores formed by recessing the outer surface. All the counter bores are arranged in a matrix, sizes of the cross sections of the counter bores are in a range of 0.01 µm to 500 µm, the spacing between two adjacent counter bores is in a range of 0.02 µm to 500 µm, and the recessing depths of the counter bores are in a range of 0.01 µm to 100 µm.

In an embodiment, the cross sections of the counter bores are in the shape of a circle, an oval, a rhombus, or a regular polygon.

In an embodiment, the low surface energy structure includes a groove or a counter bore. The insulative and thermally conductive layer has a stack surface stacked on the heating layer, and the set spacing is maintained between the groove or the counter bore and the stack surface.

In an embodiment, the low surface energy structure is formed by using at least one of a chemical etching process, a laser etching process, a plasma etching process, and a machining process.

A heating and vaporization device includes the heating assembly described in any one of the above embodiments.

The technical effect of an embodiment of this application is as follows. Since the heating assembly has a low surface energy structure, the surface energy of the outer surface can be reduced. In fact, the remaining non-recessed part of the outer surface forms a contact surface that directly contacts the aerosol-forming medium. In view of the surface energy of the contact surface being reduced, the contact surface can be caused to have strong hydrophobicity and oleophobicity, and the moisture and viscous oil liquid produced by decomposition of the aerosol-forming medium in the heating process are difficult to adhere to the contact surface, thereby preventing the moisture and viscous oil liquid adhering to the contact surface from generating various physical and chemical reactions at a high temperature to generate residue, preventing the residue from adhering to the contact surface, preventing the residue from generating peculiar smell or harmful gas in the subsequent heating process of the heating assembly, and ensuring the consistency and health of the aerosol suction taste.

### BRIEF DESCRIPTION OF THE DRAWINGS

In order to describe the technical solutions in embodiments of this application or the conventional technology more clearly, the following briefly describes the accompanying drawings required for describing the embodiments or the conventional technology. Apparently, the accompanying drawings in the following description show only some embodiments of this application, and those of ordinary skill in the art may still derive other accompanying drawings from the accompanying drawings without creative efforts.
FIG. 1 is a schematic diagram of a longitudinal cross-sectional structure of a heating assembly according to an embodiment.
FIG. 2 is a schematic diagram of a transverse cross-sectional structure of a heating assembly according to a first embodiment.
FIG. 3 is a schematic diagram of a transverse cross-sectional structure of a heating assembly according to a second embodiment.
FIG. 4 is a schematic diagram of a transverse cross-sectional structure of a heating assembly according to a third embodiment.
FIG. 5 is a schematic diagram of a transverse cross-sectional structure of a heating assembly according to a fourth embodiment.
FIG. 6 is a schematic diagram of a transverse cross-sectional structure of a heating assembly according to a fifth embodiment.
FIG. 7 is a schematic diagram of a transverse cross-sectional structure of a heating assembly according to a sixth embodiment.
FIG. 8 is a schematic diagram of a transverse cross-sectional structure of a heating assembly according to a seventh embodiment.
FIG. 9 is a schematic diagram of a transverse cross-sectional structure of a heating assembly according to an eighth embodiment.
FIG. 10a is a schematic structural diagram showing that water droplets adhere to a conventional heating assembly.
FIG. 10b is a schematic structural diagram showing that water droplets adhere to the heating assembly shown in FIG. 1.
FIG. 11a is a schematic structural diagram showing that diiodomethane droplets adhere to a conventional heating assembly.
FIG. 11b is a schematic structural diagram showing that diiodomethane droplets adhere to the heating assembly shown in FIG. 1.
FIG. 12a is a schematic diagram of a planar structure of a conventional heating assembly in an initial state.
FIG. 12b is a schematic diagram of a planar structure of the conventional heating assembly after sucking 600 to-be-vaporized medium carriers.
FIG. 13a is a schematic diagram of a planar structure of the heating assembly shown in FIG. 1 in an initial state.
FIG. 13b is a schematic diagram of a planar structure of the heating assembly shown in FIG. 1 after sucking 600 to-be-vaporized medium carriers.

### DETAILED DESCRIPTION

In order to facilitate understanding of this application, this application is described below more comprehensively with reference to the related accompanying drawings. Preferred implementations of this application are shown in the accompanying drawings. However, this application may be implemented in many different forms, and is not limited to the implementations described in this specification. On the contrary, the implementations are provided for a more thorough and comprehensive understanding of the disclosed content of this application.

It should be noted that, when an element is referred to as "being fixed to" the other element, the element may be directly on the other element, or an intermediate element may exist. When an element is considered to be "connected" to the other element, the element may be directly connected to the other element or an intermediate element may exist. The terms "inner", "outer", "left", "right", and similar expressions used in this specification are only for purposes of illustration but not indicate a unique implementation.

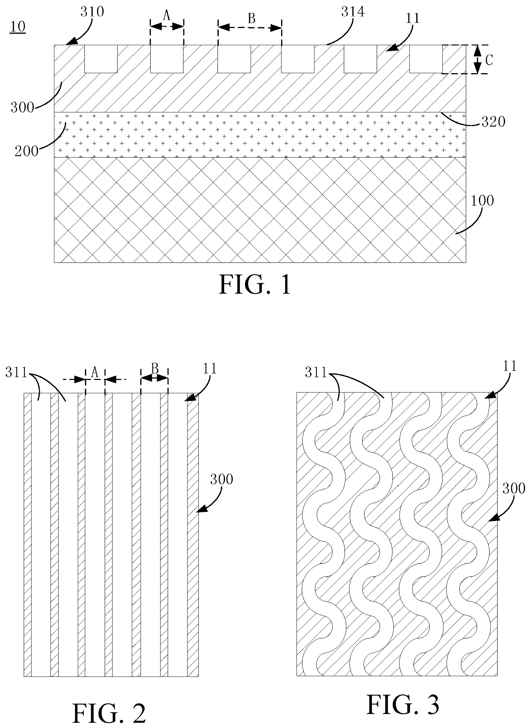

Referring to FIG. 1 and FIG. 2, a heating assembly 10 provided in an embodiment of this application includes a substrate 100, a heating layer 200, and an insulative and thermally conductive layer 300. The substrate 100, the heating layer 200, and the insulative and thermally conductive layer 300 are stacked on each other. The heating layer 200 is stacked on the substrate 100, and the insulative and thermally conductive layer 300 is stacked on the heating layer 200. That is to say, the heating layer 200 is stacked between the substrate 100 and the insulative and thermally conductive layer 300. When the heating layer 200 is energized, the heating layer 200 can generate heat. The insulative and thermally conductive layer 300 has an outer surface 310 and a stack surface 320. The outer surface 310 and the stack surface 320 are two surfaces arranged opposite to each other and facing different directions in a thickness direction of the insulative and thermally conductive layer 300. The stack surface 320 is superposed on the heating layer 200, and the outer surface 310 is located on a side of the insulative and thermally conductive layer 300 away from the heating layer 200. The heating assembly 10 is inserted into the aerosol-forming medium, so that the outer surface 310 is in direct contact with the aerosol-forming medium. When the heating layer 200 generates heat, the heat is to be transferred to the aerosol-forming medium through the insulative and thermally conductive layer 300, so that the aerosol-forming medium can generate aerosol for users to suck in a heat-not-burn manner.

A part of the outer surface 310 is relatively recessed for the whole heating assembly 10 to have a low surface energy structure 11. The low surface energy structure 11 is a micro-scale structure and/or a nano-scale structure.

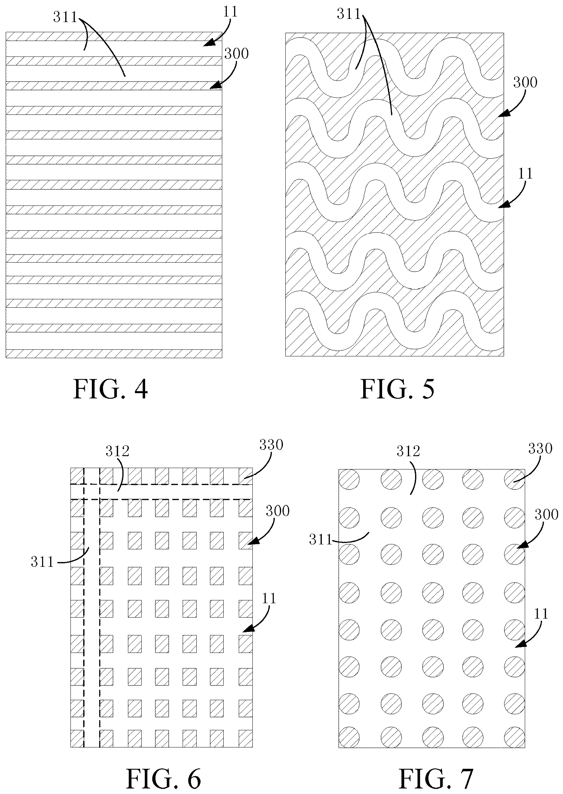

Referring to FIG. 2 and FIG. 3, in some embodiments, a first direction and a second direction perpendicular to each other are used as a reference. For example, the first direction is a longitudinal direction, and the second direction is a transverse direction. The low surface energy structure 11 includes first grooves 311. The first grooves 311 are formed by recessing a part of the outer surface 310 by the set depth. A plurality of first grooves 311 are arranged. Each of the first grooves 311 extends in the first direction as a whole, and all the first grooves 311 are arranged at intervals in the second direction. The width A of the first groove 311 in the second direction is in a range of 0.01 µm to 500 µm, and a specific value of the width A may be 5 µm, and may further be 0.01 µm, 100 µm, 500 µm, or the like. The spacing B between two adj acent first grooves 311 is in a range of 0.02 µm to 500 µm, and a specific value of the spacing B may be 10 µm, and may further be 0.02 µm, 150 µm, 500 µm, or the like. The recessing depth C of the first groove 311 is in a range of 0.01 µm to 100 µm. A specific value of the depth C may be 1 µm, and may further be 0.01 µm, 60 µm, 100 µm, or the like. The first groove 311 is not further recessed to extend to the stack surface 320, that is, a set spacing is maintained between the first groove 311 and the stack surface 320. The first groove 311 may be a linear groove (as shown in FIG. 2) or a curved groove (as shown in FIG. 3). In other embodiments, referring to FIG. 4 and FIG. 5, the first direction may be a transverse direction and the second direction may be a longitudinal direction, that is, the first groove 311 extends in the transverse direction as a whole. The first groove 311 may be formed by using at least one of a chemical etching process, a laser etching process, a plasma etching process, and a machining process. By arranging the first grooves 311, the low surface energy structure 11 can form a line micro-scale structure.

Referring to FIG. 6, FIG. 7, and FIG. 8, in some embodiments, in addition to the first groove 311 extending in the first direction as a whole, the low surface energy structure 11 may further include second grooves 312. The second grooves 312 are formed by recessing a part of the outer surface 310 by a set depth. A plurality of second grooves 312 are arranged. Each of the second grooves 312 extends in the second direction as a whole, and all the second grooves 312 are arranged at intervals in the first direction. The first grooves 311 and the second grooves 312 intersect and communicate with each other. Similar to the first groove 311, the width of the second groove 312 in the first direction is in a range of 0.01 µm to 500 µm, and a specific value of the width may be 5 µm, and may further be 0.01 µm, 100 µm, 500 µm, or the like. The spacing between two adjacent second grooves 312 is in a range of 0.02 µm to 500 µm, and a specific value of the spacing may be 10 µm, and may further be 0.02 µm, 150 µm, 500 µm, or the like. The recessing depth of the second groove 312 is in a range of 0.01 µm to 100 µm. A specific value of the depth may be 1 µm, and may further be 0.01 µm, 60 µm, 100 µm, or the like. The second groove 312 is not further recessed to extend to the stack surface 320, that is, a set spacing is maintained between the second groove 312 and the stack surface 320. The second groove 312 may be a linear groove or a curved groove. The second groove 312 may be formed by using at least one of a chemical etching process, a laser etching process, a plasma etching process, and a machining process. By arranging both the first grooves 311 and the second grooves 312, the low surface energy structure 11 can form an array micro-scale structure.

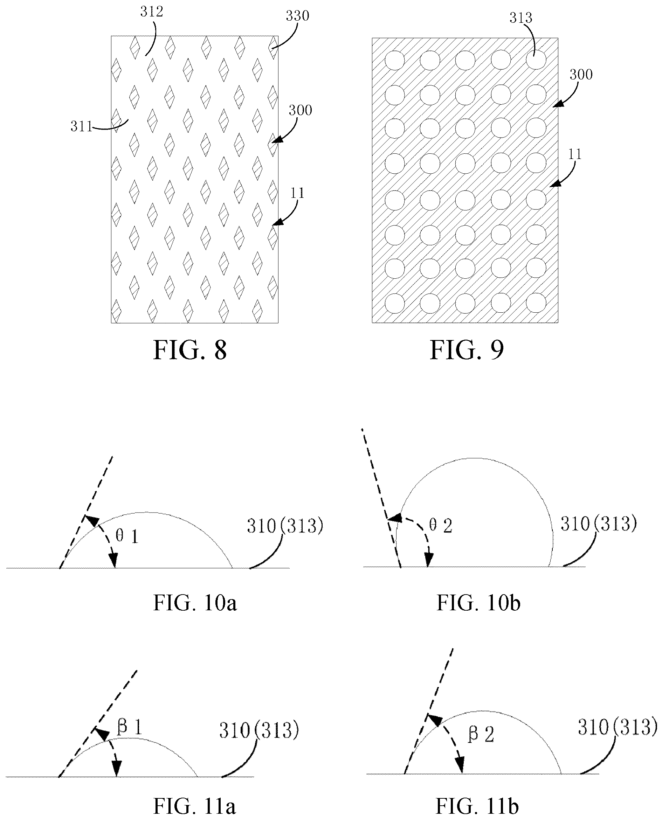

When both the first groove 311 and the second groove 312 are linear grooves, the insulative and thermally conductive layer 300 may be divided into a plurality of protruding posts 330, that is, the insulative and thermally conductive layer 300 includes the protruding posts 330. All the protruding posts 330 are arranged in a matrix to form multiple rows and multiple columns. In this case, a cross section of each of the protruding posts 330 may be rectangular or square (as shown in FIG. 6). When at least one of the first groove 311 and the second groove 312 is a curved groove, the cross section of the protruding post 330 may be circular (as shown in FIG. 7), elliptical, rhombic (as shown in FIG. 8), or in other regular polygons. For any adjacent two rows of protruding posts 330 arranged at intervals in the first direction, for example, referring to FIG. 6 and FIG. 7, orthogonal projections of the two rows of protruding posts 330 in the first direction completely overlap. In this case, the two rows of protruding posts 330 are arranged in an "aligned" mode. For another example, referring to FIG. 8, orthogonal projections of the two rows of protruding posts 330 in the first direction do not overlap at all or partially. In this case, the two rows of protruding posts 330 are arranged in a "staggered" mode.

Referring to FIG. 9, in some embodiments, the low surface energy structure 11 includes counter bores 313. The counter bores 313 are formed by recessing a part of the outer surface 310 by the set depth. A plurality of counter bores 313 are arranged. All the counter bores 313 are arranged in a matrix to form multiple rows and multiple columns. The cross sections of the counter bores 313 may be circular, or may be oval, rhombic, or other regular polygonal structures. For any adjacent two rows of counter bores 313 arranged at intervals in the first direction, for example, orthogonal projections of the two rows of counter bores 313 in the first direction completely overlap. In this case, the two rows of counter bores 313 are arranged in an "aligned" mode. For another example, orthogonal projections of the two rows of counter bores 313 in the first direction do not overlap at all or partially. In this case, the two rows of counter bores 313 are arranged in a "staggered" mode. The counter bores 313 may be formed by using at least one of a chemical etching process, a laser etching process, a plasma etching process, and a machining process. By arranging the counter bores 313, the low surface energy structure 11 can form a lattice micro-scale structure.

A cross-sectional size of each of the counter bores 313 may be in a range of 0.01 µm to 500 µm, and a specific value of the cross-sectional size may be 5 µm, and may further be 0.01 µm, 100 µm, 500 µm, or the like. The spacing between two adjacent counter bores 313 is in a range of 0.02 µm to 500 µm, and a specific value of the spacing may be 10 µm, and may further be 0.02 µm, 150 µm, 500 µm, or the like. A recessing depth of the counter bores 313 is in a range of 0.01 µm to 100 µm. A specific value of the depth may be 1 µm, and may further be 0.01 µm, 60 µm, 100 µm, or the like. The counter bore 313 is not further recessed to extend to the stack surface 320, that is, a set spacing is maintained between the counter bore 313 and the stack surface 320.

By arranging the first groove 311, the second groove 312, or the counter bore 313 on the outer surface 310 of the insulative and thermally conductive layer 300, the whole heating assembly 10 can have a low surface energy structure 11, thereby reducing the surface energy of the outer surface 310. In fact, when the heating assembly 10 is inserted into the aerosol-forming medium, the recessed part of the outer surface 310 cannot contact the aerosol-forming medium, while the remaining non-recessed part of the outer surface 310 forms a contact surface 314 that directly contacts the aerosol-forming medium. In view of the surface energy of the outer surface 310 being reduced, the contact surface 314 can be caused to have strong hydrophobicity and oleophobicity, and the moisture and viscous oil liquid produced by decomposition of the aerosol-forming medium in the heating process are difficult to adhere to the contact surface 314, thereby preventing the moisture and viscous oil liquid adhering to the contact surface 314 from generating various physical and chemical reactions at a high temperature to generate residue, preventing the residue from adhering to the contact surface 314, preventing the residue from generating peculiar smell or harmful gas in the subsequent heating process of the heating assembly 10, and ensuring the consistency and health of the aerosol suction taste.

Referring to FIG. 10a to FIG. 11b, the heating assembly 10 in the above embodiments is compared through experiments with the conventional heating assembly without a low surface energy structure arranged by recessing the outer surface. When water and diiodomethane adhere to the outer surface 310 of the heating assembly 10, contact angles and surface energy of water droplets and diiodomethane droplets are compared in Table 1 below. The contact angle is positioned as an included angle between the part of the outer surface 310 covered by the droplet and the tangent line where the droplet contacts the outer surface 310.

**Table 1 Comparison of the conventional heating assembly with the heating assembly of the above embodiments**

| Type | Contact angle of water droplets | Contact angle of diiodomethane droplets | Surface energy mN/m |
|---|---|---|---|
| Conventional heating assembly | 59.02° (θ1) | 51.78° (β1) | 48.87 |
| heating assembly of the above embodiments | 114.36° (θ2) | 72.73° (β2) | 21.36 |

It can be concluded from Table 1 that the surface energy of the heating assembly 10 of the above embodiments is significantly reduced compared with that of the conventional heating assembly, and the contact angles of water droplets and diiodomethane droplets are all significantly improved, which makes it difficult for water droplets and diiodomethane droplets to adhere to the outer surface 310 and form residue.

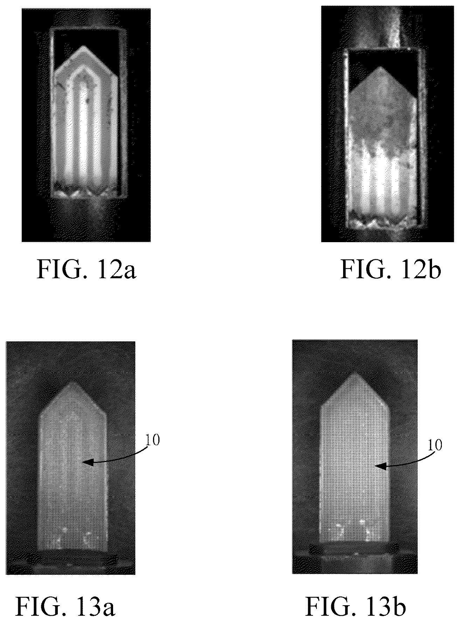

When the heating assembly 10 in the above embodiments is compared through heating experiments with the conventional heating assembly without the low surface energy structure 11, for example, after sucking 600 to-be-vaporized medium carriers, referring to FIG. 12a and FIG. 12b, the conventional heating assembly generates obvious residue, and referring to FIG. 13a and FIG. 13b, the heating assembly 10 in the above embodiments does not generate residue.

This application further provides a heating and vaporization device. The heating and vaporization device includes a power supply and the heating assembly 10 described above. The power supply provides electric energy to the heating layer 200 of the heating assembly 10, so that the heating layer 200 converts the electric energy into heat energy, and the aerosol-forming medium can generate aerosol for the user to suck in a heat-not-burn manner. By arranging the heating assembly 10, the generation of residue can be avoided, thereby improving the consistency of the suction taste and health safety of the aerosol generated by the heating and vaporization device.

The technical features in the foregoing embodiments may be randomly combined. For concise description, not all possible combinations of the technical features in the embodiments are described. However, provided that combinations of the technical features do not conflict with each other, the combinations of the technical features are considered to fall within the scope described in this specification.

The foregoing embodiments merely express several implementations of this application. The descriptions thereof are relatively specific and detailed, but should not be understood as limitations to the scope of this application. It should be noted that for a person of ordinary skill in the art, several transformations and improvements can be made without departing from the idea of this application. These transformations and improvements belong to the protection scope of this application. Therefore, the protection scope of the patent of this application shall be subject to the appended claims.

## Claims

1. A heating assembly, comprising:
an outer surface configured to contact an aerosol-forming medium,
wherein a part of the outer surface is relatively recessed to form a low surface energy structure of the heating assembly, and the low surface energy structure is a micro-scale structure and/or a nano-scale structure.

2. The heating assembly of claim 1, further comprising:
a substrate;
a heating layer; and
an insulative and thermally conductive layer,
wherein the heating layer is stacked between the substrate and the insulative and thermally conductive layer, and a surface of a side of the insulative and thermally conductive layer away from the heating layer forms the outer surface.

3. The heating assembly of claim 2, wherein using a first direction and a second direction perpendicular to each other as a reference, the low surface energy structure comprises a plurality of first grooves formed by recessing the outer surface, each of the first grooves integrally extending in the first direction, and the plurality of first grooves being arranged at intervals in the second direction.

4. The heating assembly of claim 3, wherein a width of each first groove in the second direction is in a range of 0.01 µm to 500 µm, a spacing between two adjacent first grooves is in a range of 0.02 µm to 500 µm, and a recessing depth of each first groove is in a range of 0.01 µm to 100 µm.

5. The heating assembly of claim 3, wherein each first groove is a linear groove or a curved groove.

6. The heating assembly of claim 3, wherein the low surface energy structure further comprises a plurality of second grooves formed by recessing the outer surface, each of the second grooves integrally extending in the second direction, the plurality of second grooves being arranged at intervals in the first direction, and wherein the first grooves and the second groovesintersect and communicate with each other.

7. The heating assembly of claim 6, wherein a width of each second groove in the first direction is in a range of 0.01 µm to 500 µm, a spacing between two adjacent second grooves is in a range of 0.02 µm to 500 µm, and a recessing depth of each second groove is in a range of 0.01 µm to 100 µm.

8. The heating assembly of claim 6, wherein each second groove is a linear groove or a curved groove.

9. The heating assembly of claim 6, wherein the insulative and thermally conductive layer comprises a plurality of protruding posts arranged in a matrix, and cross sections of the protruding posts are in a shape of a circle, an oval, a rectangle, a rhombus, or a regular polygon.

10. The heating assembly of claim 9, wherein for any adjacent two rows of protruding posts arranged at intervals in the first direction, orthogonal projections of the two rows of protruding posts in the first direction completely overlap, partially overlap, or do not overlap.

11. The heating assembly of claim 2, wherein the low surface energy structure comprises a plurality of counter bores formed by recessing the outer surface, all the counter bores being arranged in a matrix, sizes of cross sections of the counter bores being in a range of 0.01 µm to 500 µm, a spacing between two adjacent counter bores being in a range of 0.02 µm to 500 µm, and recessing depths of the counter bores being in a range of 0.01 µm to 100 µm.

12. The heating assembly of claim 11, wherein the cross sections of the counter bores are in a shape of a circle, an oval, a rhombus, or a regular polygon.

13. The heating assembly of claim 2, wherein the low surface energy structure comprises a groove or a counter bore, the insulative and thermally conductive layer has a stack surface stacked on the heating layer, and a set spacing is maintained between the groove or the counter bore and the stack surface.

14. The heating assembly of any one of claims 1 to 13, wherein the low surface energy structure is formed by at least one of a chemical etching process, a laser etching process, a plasma etching process, and a machining process.

15. A heating and vaporization device, comprising the heating assembly of any one of claims 1 to 14.
